# EUROPEAN PATENT SPECIFICATION

(11) **EP 1 917 312 B1**
(45) Date of publication and mention of the grant of the patent: **29.04.2009**
(21) Application number: 06778250.8
(22) Date of filing: 16.08.2006
(51) Int. Cl.: C09B 23/06, C09B 69/04

(54) **COLORANT COMPOSITIONS CONTAINING AN OXONOL DYE**
FARBMITTELZUSAMMENSETZUNGEN MIT EINEM OXONOL-FARBSTOFF
COMPOSITIONS COLORANTES CONTENANT UNE TEINTURE D'OXONOL

(30) Priority: 26.08.2005 EP 05107843
(43) Date of publication of application: 07.05.2008
(73) Proprietor: Ciba Holding Inc., 4057 Basel (CH)
(72) Inventor: FEILER, Leonhard, 79589 Binzen (DE); RAIMANN, Thomas, CH-4334 Sisseln (CH)
(86) International application number: PCT/EP2006/065331
(87) International publication number: WO 2007/023112

(56) References cited:
- WO-A-20/05030876

## Description

The present invention relates to heatstable oxonol dyes and colorant compositions comprising them. The present invention further relates to the use of heatstable oxonol dyes in printing colorants and for coloring of polymeric material.

Combinations of oxonol dyes and polymers having infrared-absorbing groups are known from WO 2001/94123.

JP-A-2001-342364 discloses, in general, the use of oxonol dyes in printing colorants and also in further applications without mention of highly soluble compounds.

Compositions comprising at least one oxonol dye and at least one metal complex are known from WO 03/042989.

Several oxonol dyes, a process for their preparation and a process for coloring of plastics or polymeric particles as well as their use in printing inks and printing colorants is disclosed in WO 05/030876.

GB-A-2,156,373 teaches bleachable dyes for use in photographic assemblies, for example the compound of formula (II)

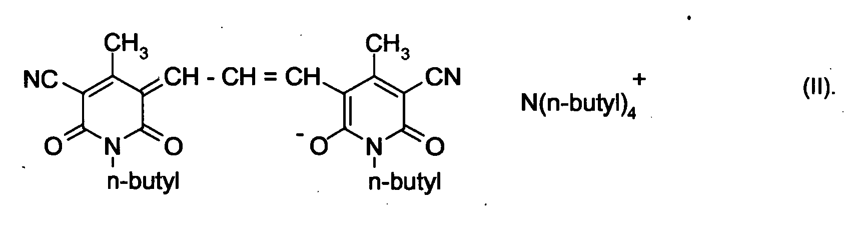

These bleachable dyes release photographically useful species during processing when incorporated in a photographic assembly.

The object of the present invention is to provide compounds having high tinctorial strength that are very readily soluble in organic solvents and only sparingly soluble in water and that are stable at temperatures up to 80°C and that can be used as soluble printing dyes, wood stains and in the coloring of polar plastics. This cannot satisfactorily be achieved using the compounds known today. Oxonol dyes known in the art are not both sufficiently soluble in organic solvents and posses the desired stability at elevated temperatures. Oxonol dyes known in the art show a strong tendency for solid-state sintering which often starts already at temperatures of about 30°C.

It has now been found, surprisingly, that specific oxonol dyes in the form of selected ammonium salts, which contain low molecular alkyl chains attached to the nitrogen atoms, achieve the above-mentioned object to a substantial degree. The teaching in WO 05/030876 merely focuses on oxonol dyes having high tinctorial strength and that are sufficiently soluble in organic solvents. In contrast, the present invention teaches oxonol dyes that are further characterized by improved heat resistance in solid state and hence meet today's market requirements for excellent storage stability.

The present invention relates to a colorant composition comprising
(i) at least one oxonol dye of general formula (I) 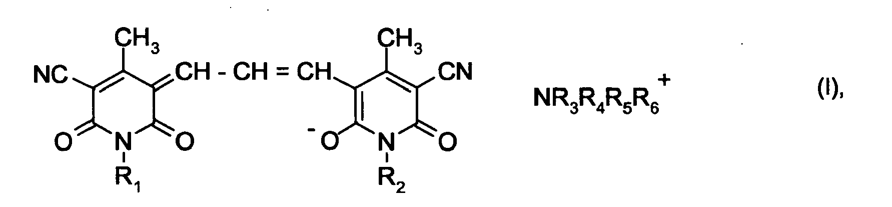 wherein
   R₁ and R₂ are each independently of the other linear or branched C₂-C₆alkyl, preferably C₄-C₅alkyl residues;
   R₃, R₄ and R₅ are each independently of the other hydrogen, a C₂-C₁₄alkyl residue which may be unsubstituted or hydroxy- or amino-substituted and optionally interrupted by an oxygen atom and
   R₆ is a C₂-C₁₄alkyl residue, which may be unsubstituted or hydroxy- or amino-substituted and optionally interrupted by an oxygen atom; and
(ii) at least one cellulose nitrate binder.

Optionally, the colorant composition according to the invention further comprises at least one plasticizer selected from the group of phthalates, citrates, and adipates.

Colorant compositions are especially preferred wherein R₁ and/or R₂ are n-butyl or n-pentyl.

Also preferred are colorant compositions wherein R₃, R₄, R₅ and R₆ are each independently of the other linear or branched C₂-C₆alkyl residues and even more preferred wherein R₃, R₄, R₅ and R₆ are each n-butyl residues.

Colorant compositions that comprise an oxonol dye of formula (II), (III) or (IV) 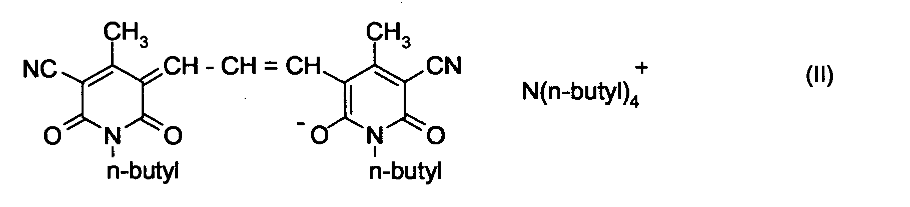 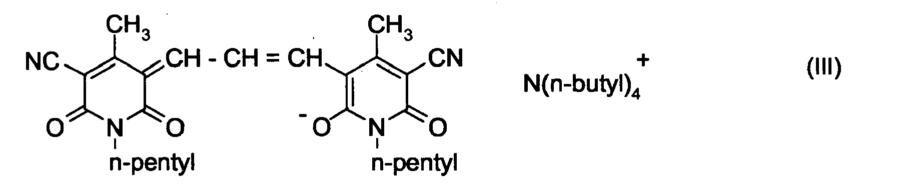 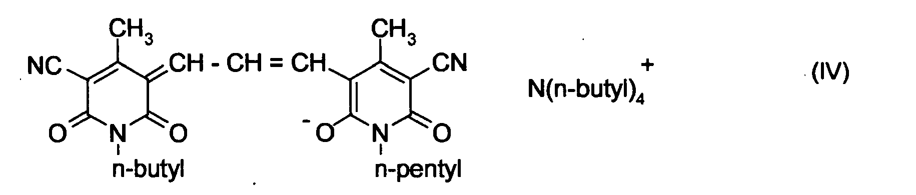 are especially preferred.

The oxonol dyes of formula (I) and the colorant compositions according to the invention are suitable for the preparation of printing colorants or printing pastes.

The cellulose nitrate of the inventive colorant composition that is used as a binder can vary greatly in such factors as molecular weight and nitrogen content. Cellulose nitrates having a nitrogen content of up to about 13 weight percent are preferred. Cellulose nitrates having a nitrogen content of from about 11.5 to about 13 percent is especially preferred. A wide range of cellulose nitrates, at different viscosities and different nitrogen contents, is available. The binder should be readily soluble in an organic solvent or a mixture of organic solvents.

Alcohol soluble cellulose nitrate is preferred, such as that which exhibits appropriate solubility in lower alcohols like ethanol. However, ketone soluble cellulose nitrate is also suitable.

Instead of cellulose nitrate, poly(vinyl chloride-covinyl acetate) can also be used as a binder in a colorant composition comprising at least one oxonol dye of general formula (I) wherein R₁, R₂, R₃, R₄, R₅ and R₆ are defined as above. Preferably, the poly(vinyl chloride-covinyl acetate) has a molecular weight of from about 15,000 to about 44,000 and a glass transition temperature of from about 40 to about 80°C.

For the preparation of printing colorants or printing pastes using the colorant composition according to the invention it is preferred to add a plasticizer in order to provide sufficient water resistance and abrasion resistance to the formed ink image. The plasticizer is preferably an alkyl or aryl phthalate selected from a group comprising dibutylphthalate, diphenylphthalate, dimethylphthalate, dicyclohexylphthalate, butylphthalyl butyl glycolate and butylbenzylphthalate. Citric acid esters are also suitable.

The present invention also relates to the use of the oxonol dyes of formula (I) or the colorant compositions according to the instant invention for the preparation of printing colorants or printing pastes, optionally also together with other dyes, as well as to the printing colorants or printing pastes obtained.

The amount of oxonol dyes to be added to the printing colorants or printing pastes is dependent on the desired colour strength; in general, amounts of from 0.01 to 15% by weight, especially from 0.02 to 10% by weight, based on the material to be printed, have proved suitable.

For printing, the customary thickeners will be used, e.g. modified or unmodified natural products, for example alginates, British gum, gum arabic, crystal gum, carob flour, tragacanth, carboxymethyl cellulose, hydroxyethyl cellulose, starch or synthetic products, for example polyacrylamides, polyacrylic acid or copolymers thereof, or polyvinyl alcohols.

The printing pastes also comprise, if desired, acid donors, such as butyrolactone or sodium hydrogen phosphate, preservatives, sequestering agents, emulsifiers, organic solvents, e.g. alcohols, esters, toluene and xylene, binders, e.g. nitrocellulose and vinyl copolymers, softeners, e.g. citric acid, oxidising agents, deaerating agents, light stabilisers and UV stabilisers.

For printing, the printing paste is applied directly to the entire surface of the material to be printed or to parts thereof, printing machines of the customary type, e.g. flexographic/intaglio printing, offset printing, rotary or flat-film printing machines, advantageously being used. The printing pastes according to the invention are also suitable for transfer printing.

The oxonol dyes of formula (I) or the colorant compositions according to the instant invention impart to the mentioned materials, especially to polyester materials, level color shades having very good in-use fastness properties.

The oxonol dyes of formula (I) or the colorant compositions according to the instant invention can also be used in the preparation of printing inks, preferably inks used in an ink-jet method.

The present invention also relates to inks used in the ink-jet printing method that comprise at least one oxonol dye of formula (I) or at least one colorant composition according to the instant invention.

The total amount of the oxonol dyes of formula (I) present in the inks is preferably from 0.5 to 35% by weight, especially from 1 to 30% by weight and more especially from 1 to 20% by weight, based on the total weight of the ink. The especially preferred lower limit is 1.2% by weight, especially 1.5% by weight. The especially preferred upper limit is 15% by weight, especially 10% by weight.

The inks according to the invention comprise at least one cellulose nitrate binder. The cellulose nitrate binders are classified according to their degree of nitration into ester-soluble types (nitrogen content ca. 12 %) and alcohol-soluble types, which are also soluble in esters (nitrogen content ca. 11 %). Both types are supplied in varying degrees of polymerization that confer varying levels of solution viscosity. The low-viscosity, alcohol-soluble grades are especially suitable for printing inks. Their solution viscosity is very high compared to other resins, so concentrations are limited to 12 -18 %. Hard resins (e.g., maleic resin) are added to increase the solids content, thereby improving the film properties and increasing the gloss of a print.

Since the aforementioned cellulose nitrate binders are very brittle, the ink film is preferably be made elastic (i.e., softened). Therefore, the inks according to the invention preferably comprise at least one plasticizers selected from the group of phthalates, citrates, and adipates. The amount of plasticizer added is from 35 to 50 % based on cellulose nitrate.

The inks preferably comprise a solubiliser or a humectant, for example a C₁-C₄alcohol, such as methanol, ethanol, n-propanol, isopropanol, n-butanol, sec-butanol, tert-butanol or isobutanol; an amide, e.g. dimethylformamide or dimethylacetamide; a ketone or ketone alcohol, e.g. acetone, methyl isobutyl ketone, diacetone alcohol; an ether, e.g. tetrahydrofuran or dioxane; a nitrogen-containing heterocyclic compound, e.g. N-methyl-2-pyrrolidone or 1,3-dimethyl-2-imidazolidone; a polyalkylene glycol, preferably a low molecular weight polyethylene glycol having a molecular weight of from 100 to 800, e.g. diethylene glycol, triethylene glycol, tetraethylene glycol, polyethylene glycol 200, polyethylene glycol 300, polyethylene glycol 400 or polyethylene glycol 600, especially having a molecular weight of from 150 to 400, or a low molecular weight polypropylene glycol, e.g. dipropylene glycol, tripropylene glycol, polypropylene glycol P 400 or polypropylene glycol P 425; a C₁-C₄alkyl ether of a polyalkylene glycol, e.g. diethylene glycol monobutyl ether, 2-(2-methoxyethoxy)ethanol, 2-(2-ethoxyethoxy)ethanol, 2-[2-(2-methoxyethoxy)ethoxy]ethanol or 2-[2-(2-ethoxyethoxy)ethoxy]ethanol; a C₂-C₆alkylene glycol or a thioglycol, e.g. ethylene glycol, propylene glycol, butylene glycol, 1,5-pentanediol, thiodiglycol, hexylene glycol; further a polyol, e.g. glycerol or 1,2,6-hexanetriol; or a C₁-C₄alkyl ether of a polyhydric alcohol, e.g. 2-methoxyethanol or 1-methoxypropan-2-ol.

More especially, the inks comprise at least one solubiliser or humectant from the group consisting of polyethylene glycols having a molecular weight of from 150 bis 400, diethylene glycol monobutyl ether, N-methyl-2-pyrrolidone and glycerol and especially tetraethylene glycol, polyethylene glycol 400, diethylene glycol monobutyl ether and glycerol, usually in an amount of from 2 to 30% by weight, especially from 5 to 25% by weight and more especially from 20 to 25% by weight, based on the total weight of the ink.

The inks may in addition comprise solubilisers, e.g. ε-caprolactam.

As humectants in the inks according to the invention there also come into consideration, for example, urea or a mixture of sodium lactate (advantageously in the form of a 50 to 60% aqueous solution) and glycerol and/or propylene glycol in amounts of preferably from 0.1 to 30% by weight, especially from 2 to 30% by weight.

The inks may comprise thickeners of natural or synthetic origin, *inter alia* for adjusting the viscosity.

Examples of thickeners that may be mentioned include commercially available alginate thickeners, starch ethers and carob flour ethers, especially sodium alginate on its own or in admixture with modified cellulose, for example methyl, ethyl, carboxymethyl, hydroxyethyl, methylhydroxyethyl, hydroxypropyl or hydroxypropylmethyl cellulose, especially with preferably from 20 to 25 percent by weight of carboxymethyl cellulose. There may furthermore be mentioned as synthetic thickeners, for example, those based on poly(meth)acrylic acids or poly(meth)acrylamides.

The inks contain such thickeners in an amount of, for example, from 0.01 to 2% by weight, especially from 0.01 to 1% by weight and more especially from 0.01 to 0.5% by weight, based on the total weight of the ink.

The inks may also comprise buffer substances, for example borax, borate, phosphate, polyphosphate or citrate. Examples that may be mentioned are borax, sodium borate, sodium tetraborate, sodium dihydrogen phosphate, disodium hydrogen phosphate, sodium tripolyphosphate, sodium pentapolyphosphate and also sodium citrate. They are used especially in amounts of from 0.1 to 3% by weight, more especially from 0.1 to 1% by weight, based on the total weight of the ink, to establish a pH value of, for example, from 4 to 9, especially from 5 to 8.5.

Further additives that may be present in the inks are surfactants or wetting agents.

Surfactants or wetting agents that come into consideration are the commercially available anionic or non-ionic surfactants.

Furthermore, the inks may in addition comprise customary additives, e.g. anti-foams or especially substances that inhibit fungal and/or bacterial growth. Such additives are usually used in amounts of from 0.01 to 1% by weight, based on the total weight of the ink.

Suitable preservatives include formaldehyde-yielding agents, e.g. paraformaldehyde and trioxane, especially aqueous formaldehyde solutions, for example 30 to 40 percent by weight formaldehyde solutions, imidazole compounds, e.g. 2-(4-thiazolyl)benzimidazole, thiazole compounds, e.g. 1,2-benzisothiazolin-3-one or 2-n-octyl-isothiazolin-3-one, iodine compounds, nitriles, phenols, haloalkylthio compounds or pyridine derivatives, especially 1,2-benzisothiazolin-3-one or 2-n-octyl-isothiazolin-3-one.

The inks can be prepared in customary manner by mixing together the individual components, for example in the desired amount of ethanol or water. Suspended matter and insoluble components present in the inks are removed, for example, by filtration through filters having a pore size of from 0.2 to 0.5 µm.

Preference is given to inks having a viscosity of from 1 to 40 mPa·s, especially from 1 to 20 mPa·s and more especially from 1 to 10 mPa·s.

The inks according to the invention are suitable for use in recording systems in which the ink is expressed from a small aperture in the form of droplets and directed onto a planar substrate on which an image is formed. Suitable substrates include, for example, paper, plastics films or textile fibre materials, preferably paper or plastics films and especially a plastics-coated paper. Suitable recording systems include, for example, commercially available ink-jet printers for use in paper printing or textile printing.

As examples of paper that can be printed with the inks according to the invention there may be mentioned commercially available ink-jet paper, photo paper, glossy paper, plastics-coated paper, e.g. Epson Ink-jet Paper, Epson Photo Paper, Epson Glossy Paper, Epson Glossy Film, HP Special Ink-jet Paper, Encad Photo Gloss Paper and Ilford Photo Paper. Plastics films that can be printed with the inks according to the invention are, for example, transparent or cloudy/opaque. Suitable plastics films are, for example, 3M Transparency Film. Preference is given to glossy paper, such as, for example, Epson Glossy Paper.

As textile fibre materials there come into consideration especially nitrogen-containing or hydroxy group-containing fibre materials, for example woven textile fabric made of cellulose, silk, wool or synthetic polyamides, especially silk.

In the case of the ink-jet printing method, individual droplets of ink are sprayed onto a substrate from a nozzle in a controlled manner. It is mainly the continuous ink-jet method and the drop-on-demand method that are used for that purpose. In the case of the continuous ink-jet method, the droplets are produced continuously, droplets not required for the printing operation being discharged into a receptacle and recycled. In the case of the drop-on-demand method, on the other hand, droplets are generated as desired and used for printing; that is to say, droplets are generated only when required for the printing operation. The production of the droplets can be effected, for example, by means of a piezo ink-jet head or by thermal energy (bubble jet). For the process according to the invention, printing by means of a piezo ink-jet head is preferred, but preference is given also to printing according to the continuous ink-jet method.

The oxonol dyes of formula (I) can be prepared according to processes known *per se*, for example by reacting 1 mol of a compound of formula 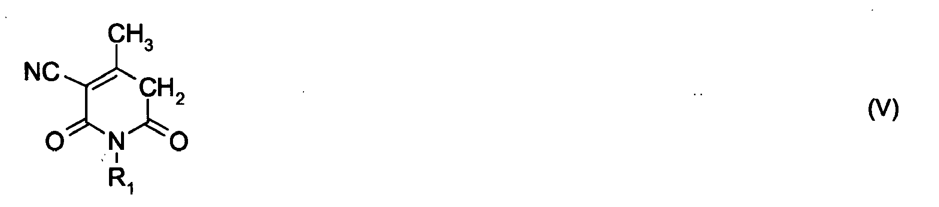 and 1 mol of a compound of formula 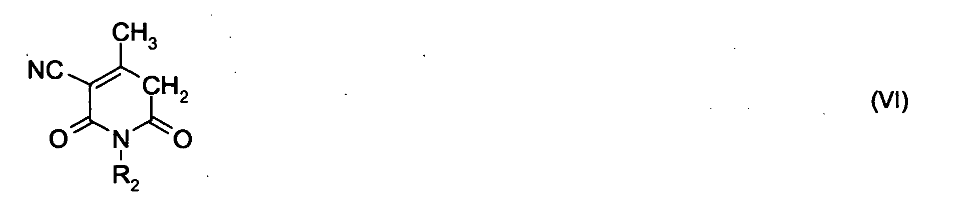 with 1 mol of the compound of formula 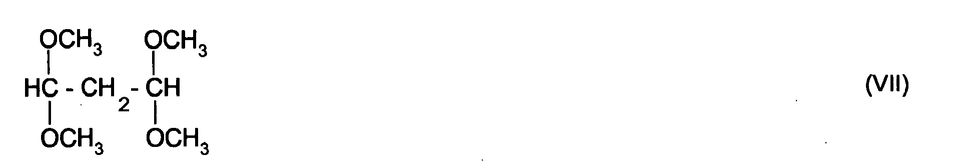 in an organic solvent and in the presence of a base to form a compound of formula

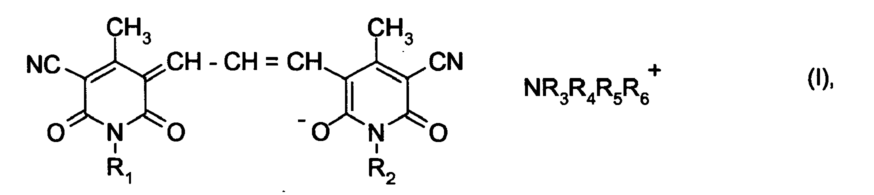

R₁, R₂, R₃, R₄, R₅ and R₆ have the definitions and preferred meanings as given above.

The ammonium cation is derived from the corresponding hydroxide.

Solvents may in this case be water or organic polar solvents, for example alcohols, amides, ketones or also amines. Where amines are used as solvents (e.g. pyridine, triethylamine), the corresponding pyridinium or triethylammonium salt is obtained, which can then be converted into the soluble product by treatment with the corresponding desired cation. Equally, it is possible using an inorganic base to prepare the corresponding oxonol salt, which likewise yields the highly soluble dye. The reaction temperature may generally be from room temperature (approximately 20°C) to the boiling point of the solvent used.

The compounds of formula (V) to (VII) are known or can be prepared in a manner known per se.

The organic solvents in which the dyes according to the invention are soluble are, for example, linear, branched or cyclic alcohols, linear, branched or cyclic ketones, carboxylic acid esters, toluene and xylene.

The oxonol dyes of formula (I) are especially very readily soluble in polar solvents, especially in methanol, ethanol, ethyl acetate, butyl acetate, methylethyl ketone and isobutylmethyl ketone.

The oxonol dyes of formula (I) can also be used in a process for the production of colored plastics or polymeric colored particles, which comprises blending with one another a high molecular weight organic material and a tinctorially effective amount of at least one oxonol dye of formula (I).

The coloring of high molecular weight, organic substances using the oxonol dye of formula (I) is effected, for example, by admixing such a dye with such substrates using roll mills or mixing or grinding apparatuses, with the result that the dye is dissolved or finely distributed in the high molecular weight material. The high molecular weight organic material with the admixed dye is then processed according to methods known per se, such as, for example, calendering, compression moulding, extrusion, coating, spinning, pouring or injection moulding, whereby the coloured material acquires its final shape. Admixture of the dye can also be effected immediately prior to the actual processing step, for example by continuously simultaneously feeding pulverulent dye and a granulated or pulverulent high molecular weight organic material and, optionally, also additional ingredients, such as additives, directly into the intake zone of an extruder, the constituents being mixed just prior to processing. Generally, however, preference is given to mixing the dye into the high molecular weight organic material beforehand, because more evenly coloured substrates can be obtained.

It is often desirable, in order to produce non-rigid mouldings or to reduce their brittleness, to incorporate so-called plasticizers into the high molecular weight compounds prior to shaping. There may be used as plasticizers, for example, esters of phosphoric acid, phthalic acid or sebacic acid. In the process for the production of colored plastics or polymeric colored particles, the plasticizers may be incorporated into the polymers before or after the incorporation of the colorant. It is also possible, in order to achieve different shades of color, to add to the high molecular weight organic materials, in addition to the dye of formula (I), also further dyes or other colorants in any desired amounts, optionally together with further additives, e.g. fillers or siccatives.

Preference is given to the coloring of thermoplastic plastics, especially in the form of fibres or films.

Preferred high molecular weight organic materials that can be colored are, very generally, polymers having a dielectric constant ≥ 2.5, especially polyesters, polycarbonate (PC), polystyrene (PS), polymethyl methacrylate (PMMA), polyamide, polyethylene, polypropylene, styrene/acrylonitrile (SAN) and acrylonitrile/butadiene/styrene (ABS). Especially preferred are polyesters and polyamide. More especially preferred are linear aromatic polyesters obtainable by polycondensation of terephthalic acid and glycols, especially ethylene glycol, or condensation products of terephthalic acid and 1,4-bis(hydroxymethyl)cyclohexane, for example polyethylene terephthalate (PET) or polybutylene terephthalate (PBTP); also polycarbonates, e.g. those obtained from α,α-dimethyl-4,4-dihydroxy-diphenylmethane and phosgene, or polymers based on polyvinyl chloride and on polyamide, e.g. polyamide-6 or polyamide-6.6.

The oxonol dyes described above impart to the above-mentioned materials, especially the polyester and polyamide materials, shades of strong colour having very good in-use fastness properties, especially a good fastness to light.

The oxonol dyes of formula (I) or the colorant compositions according to the instant invention can also be used in the printing of semi-synthetic and, especially, synthetic hydrophobic fibre materials, more especially textile materials, and also in the printing of paper, plastics films or metal foils, especially aluminium foils.

Semi-synthetic textile materials that come into consideration are especially cellulose 2½ acetate and cellulose triacetate.

Synthetic hydrophobic textile materials consist especially of linear, aromatic polyesters, for example polyesters of terephthalic acid and glycols, especially ethylene glycol, or condensation products of terephthalic acid and 1,4-bis(hydroxymethyl)cyclohexane; of polycarbonates, e.g. polycarbonates obtained from α,α-dimethyl-4,4'-dihydroxy-diphenylmethane and phosgene, and of fibres based on polyvinyl chloride and on polyamide.

The oxonol dyes described above are also highly suitable for the printing of polyester/wool and polyester/cellulosic fibre blends.

The said textile material can be in a variety of processing forms, e.g. in the form of fibres, yarns or non-wovens, in the form of woven fabrics or knitted fabrics.

It is advantageous to convert the oxonol dyes of formula (I) into a dye preparation prior to use. For that purpose, the dye is so ground that its particle size is on average from 0.1 to 10 microns. Grinding can be carried out in the presence of dispersants. For example, the dried dye is ground with a dispersant or is kneaded into paste form with a dispersant and then dried *in vacuo* or by atomisation. The preparations so obtained can be used, after the addition of an organic solvent, to prepare printing colorants or printing pastes.

The present invention also relates to the above-mentioned uses of the oxonol dyes of formula (I) and the colorant compositions according to the invention, such as in a process of printing semi-synthetic or synthetic hydrophobic fibre material, especially textile material, which comprises applying the oxonol dyes of formula (I) or the printing ink compositions according to the instant invention to the said material. The mentioned hydrophobic fibre material is preferably textile polyester material.

Further substrates that can be treated by the process according to the invention and also preferred process conditions can be found hereinabove in the more detailed explanation.

The invention also relates to the hydrophobic fibre material, preferably polyester textile material, paper and plastics films or metal foils, printed using the said process.

The oxonol dyes of formula (I) according to the invention are furthermore suitable for other recording methods, for example thermotransfer printing.

The following Examples serve to illustrate the invention. Unless otherwise indicated, parts are parts by weight and percentages are percentages by weight. The temperatures are given in degrees Celsius. The relationship between parts by weight and parts by volume is the same as that between grams and cubic centimetres.

### Example 1:

42.92 g (0.208 mol) of 1-buty-4-methyl-2,6-tetrahydro-1,2,5,6-tetrahydro-pyridin-3-carbonitril and 9.91 g (0.10 mol) of potassium acetate are introduced, under nitrogen, into 300 ml of n-butanol and then 16.67 g (0.102 mol) of 1,1,3,3 tetramethoxypropane are added over 30 min at 100 to 105 degree Celsius. The mixture is refluxed for another 4 hours under stirring at 105 to 110 degree Celsius. An intensively blue-colored suspension is obtained. The suspension is cooled down to 50 degree Celsius. The remaining residues of solvent are removed and the solid is washed twice with 50 ml n-butanol each time at room temperature. 47.55 g (0.098 mol) (98% yield) of the potassium salt are obtained after drying the solid at 60 degree Celsius under 100hPa.

47.90 g (0.098 mol) of said potassium salt are suspended into 400 ml deionized water. The resulting blue suspension is then heated up to 60 degree Celsius and 350 ml n-butanol and then 32.24 (0.10 mol) tetrabutylammonium bromide are added. The organic phase is separated after 5 min. The remaining aqueous phase is once extracted with 50 ml n-butanol. The combined organic phases are completely concentrated under a high vacuum. 66,27 g (0.096 mol) of an intensively blue-colored crystalline product are obtained hereby. Referring to 1,1,3,3 tetramethoxypropane, the overall yield over both reaction steps amounts to 96%.
(λₘₐₓ = 603 nm, ε = 219203 in DMF)

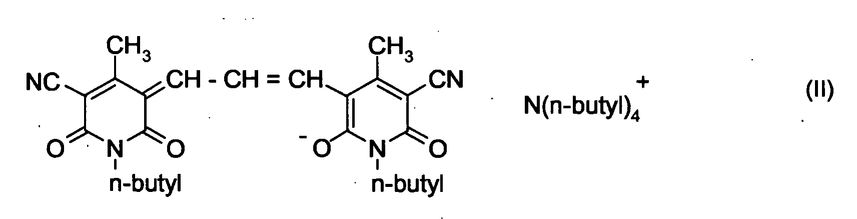

### Example 2:

45.38 g (0.206 mol) of 1-pentyl-4-methyl-2,6-dioxo-1,2,5,6-tetrahydro-pyridin-3-carbonitril and 9.91 g (0.1 mol) of potassium acetate are introduced, under nitrogen, into 200 ml of n-butanol and then 16.67 g (0.1 mol) of 1,1,3,3 tetramethoxypropane are added over 30 min at 100 to 105 degree Celsius. The mixture is refluxed for another 4 hours under stirring at 105 to 110 degree Celsius. An intensively blue-colored suspension is obtained. The suspension is cooled down to 50 degree Celsius. The remaining residues of solvent are removed and the green solid is washed twice with 50 ml n-butanol each time at room temperature. 47.23 g (91% yield) of the potassium salt are obtained after drying the solid at 60 degree Celsius under 100hPa.

46.71 g (0.098 mol) of said potassium salt are suspended into 400 ml deionized water. The pH is adjusted to 2.6 by means of Formic acid. To the resulting blue-violet suspension is then heated up to 37 degree Celsius and 350 ml n-butanol and then 29.94 (0.091 mol) tetrabutylammonium bromide are added. The organic phase is separated after 60 min. The remaining aqueous phase is once extracted with 50 ml n-butanol. The combined organic phases are completely concentrated under a high vacuum. 62.43 g (0.087 mol) of an intensively blue-colored crystalline product are obtained hereby. Referring to 1,1,3,3 tetramethoxypropane, the overall yield over both reaction steps amounts to 84%.
(λₘₐₓ = 603 nm, ε = 200169 in DMF)

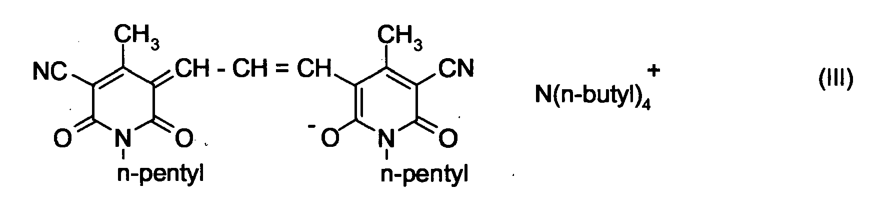

The following compounds listed in Tables 1 and 2 were prepared analogously to Example 1:

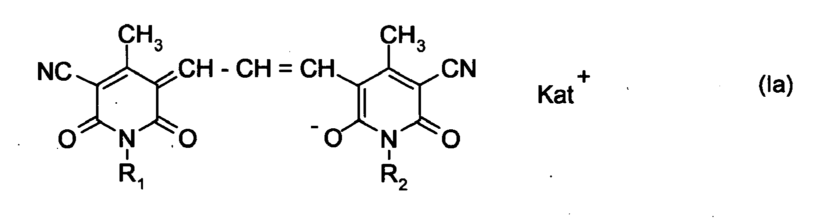

**Table 1 (a)**

| R₁ | R₂ | Kat⁺ | λₘₐₓ (DMF) | ε (DMF) | Solubility (g/l) | |
|---|---|---|---|---|---|---|
| | | | | | EtOH | MEK |
| ethyl | ethyl | tetrabutyl-ammonium | 603 | 217576 | 5.6 | 63.2 |
| n-butyl | n-butyl | tetrabutyl-ammonium | 603 | 210225 | 35.5 | 98 |
| n-pentyl | n-pentyl | tetrabutyl-ammonium | 603 | 200169 | 50 | 380 |
| 2-methyl-propyl | 2-methyl-propyl | tetrabutyl-ammonium | 603 | - | 4 | 56.2 |
| n-propyl | n-propyl | tetrabutyl-ammonium | 603 | 210231 | 14 | 69 |
| ethyl | n-butyl | tetrabutyl-ammonium | 602 | 191543 | 14.3 | 41.4 |

| | | | | | | |
|---|---|---|---|---|---|---|
| (MEK = methylethyl ketone) | | | | | | |

**Table 1 (b)**

| R₁ | R₂ | Kat⁺ | State of Aggregation | 50°C Test |
|---|---|---|---|---|
| ethyl | ethyl | tetrabutyl-ammonium | crystalline powder | positive |
| n-butyl | n-butyl | tetrabutyl-ammonium | crystalline powder | positive |
| n-pentyl | n-pentyl | tetrabutyl-ammonium | crystalline powder | positive |
| 2-methyl-propyl | 2-methyl-propyl | tetrabutyl-ammonium | crystalline powder | positive |
| i-propyl | i-propyl | tetrabutyl-ammonium | crystalline powder | positive |
| n-propyl | n-propyl | tetrabutyl-ammonium | crystalline powder | positive |
| ethyl | n-butyl | tetrabutyl-ammonium | crystalline powder | positive |

**Table 2 (a) - Comparative Tests**

| R₁ | R₂ | Kat⁺ | λₘₐₓ (DMF) | ε(DMF) | Solubility (g/l) | |
|---|---|---|---|---|---|---|
| | | | | | EtOH | MEK |
| i-propoxy-propyl | i-propoxy-propyl | Primene 81 R | 603 | 176999 | 84.0 | 207.0 |
| i-propoxy-propyl | i-propoxy-propyl | tetrapentyl ammonium | oily product | | | |
| i-propoxy-propyl | i-propoxy-propyl | tetraoctyl-ammonium | | | | |
| i-propoxy-propyl | ethyl | tetrapentyl ammonium | 603 | 172654 | 45 | 32 |
| i-propoxy-propyl | ethyl | Primene 81R | 603 | 203223 | 188 | 338 |
| i-propoxy-propyl | ethyl | tetrabutyl-ammonium | 603 | 221412 | 146 | 231 |
| i-propoxy-propyl | methyl | tetrabutyl-ammonium | 603 | - | 21.3 | 28.5 |
| i-propoxy-propyl | n-butyl | tetrabutyl-ammonium | 603 | 203834 | 197 | 339 |
| 2-methoxy-ethyl | 2-methoxy-ethyl | tetrabutyl-ammonium | oily product | | | |

**Table 2 (b) - Comparative Tests**

| R₁ | R₂ | Kat⁺ | State of Aggregation | 50°C Test |
|---|---|---|---|---|
| i-propoxy-propyl | i-propoxy-propyl | Primene81R | oil | negative |
| i-propoxy-propyl | i-propoxy-propyl | tetrapentylammonium | oil | negative |
| i-propoxy-propyl | i-propoxy-propyl | tetraoctyl-ammonium | oil | negative |
| i-propoxy-propyl | ethyl | tetrapentylammonium | oil | negative |
| i-propoxy-propyl | ethyl | Primene81R | crystalline powder | negative |
| i-propoxy-propyl | ethyl | tetrabutyl-ammonium | crystalline powder | negative |
| i-propoxy-propyl | methyl | tetrabutyl-ammonium | crystalline powder | negative |
| i-propoxy-propyl | n-butyl | tetrabutyl-ammonium | crystalline powder | negative |
| 2-methoxy-ethyl | 2-methoxy-ethyl | tetrabutyl-ammonium | oil | negative |

The 50°C test involves storing the product to be tested at 50°C over a period of 18 hours in a hot-air cabinet. A positive test result indicates that the product still exists in a solid and powdery state after the heat treatment. If the product undergoes a sintering process and/or starts to melt at this temperature, the test result is classified as negative.

### Example 3 (printing colorant):

2.0% by weight of the dye of formula (II) 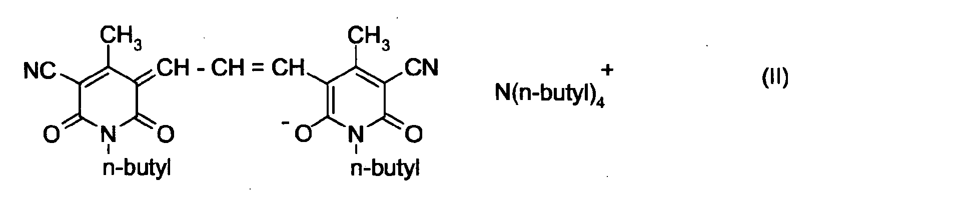 are stirred into 98.0% by weight of a formulation consisting of
- 12.0% by weight of NC AH 27 (20% ATBC) [a nitrocellulose, soluble in ethanol, containing 20% by weight of acetyl tributyl citrate]
- 2.0% by weight of Hercolyn DE [a water-repellent agent]
- 10.0% by weight of ethoxypropanol
- 20.0% by weight of ethyl acetate and
- 56.0% by weight of ethanol
until homogeneous solution is obtained.

The printing colorant gives a brilliant intense blue coloration on paper, plastics films or metal foils.

## Claims

1. A colorant composition comprising
(i) an oxonol dye of general formula (I) 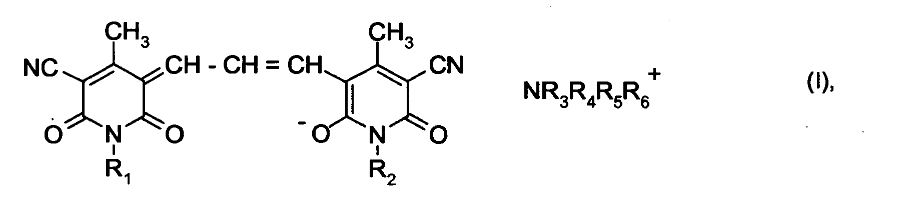 wherein
R₁ and R₂ are each independently of the other linear or branched C₂-C₆alkyl residues;
R₃, R₄ and R₅ are each independently of the other hydrogen, a C₂-C₁₄alkyl residue which may be unsubstituted or hydroxy- or amino-substituted and optionally interrupted by an oxygen atom and
R₆ is a C₂-C₁₄alkyl residue, which may be unsubstituted or hydroxy- or amino-substituted and optionally interrupted by an oxygen atom; and
(ii) at least one cellulose nitrate binder.

2. The colorant composition according to claim 1, further comprising at least one plasticizer selected from the group of phthalates, citrates, and adipates.

3. The colorant composition according to claim 1 or 2, wherein R₁ and R₂ are each independently of the other a linear or branched C₄-C₅alkyl residue.

4. The colorant composition according to claim 3, wherein R₁ and R₂ are each independently of the other an n-butyl or n-pentyl residue.

5. The colorant composition according to any of claims 1 to 4, wherein R₃, R₄, R₅ and R₆ are each independently of the other linear or branched C₂-C₆alkyl residues.

6. The colorant composition according to claim 5, wherein R₃, R₄, R₅ and R₆ are each n-butyl residues.

7. The colorant composition according to any of claims 1 to 6 comprising an oxonol dye of formula II

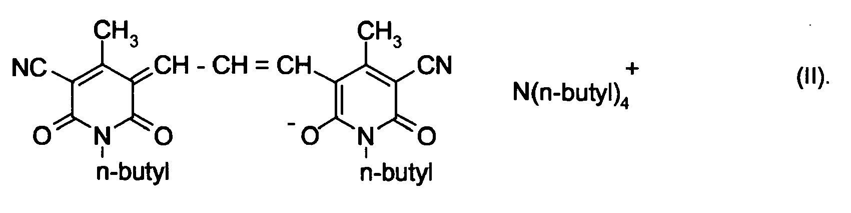

8. A process of printing semi-synthetic or synthetic hydrophobic fibre material comprising applying to or incorporating into said material at least one oxonol dye of general formula (I) and/or the colorant composition according to any of claims 1 to 7.

9. The process according to claim 8, wherein the semi-synthetic or synthetic hydrophobic fibre material comprises polyester fibres.

10. A process of coloring or printing paper, plastics films or metal foils comprising applying to or incorporating into said material at least one oxonol dye of general formula (I) and/or the colorant composition according to any of claims 1 to 7.

11. Use of at least one oxonol dye of general formula (I) and/or the colorant composition according to any of claims 1 to 7 in the coloring or printing of semi-synthetic or synthetic hydrophobic fibre material, paper, plastics films or metal foils.

12. A colored or printed material obtained according to the process of any of claims 8 to 10.

13. Use of at least one oxonol dye of general formula (I) and/or the colorant composition according to any of claims 1 to 7 in ink-jet printing.

## Patentansprüche

1. Farbmittelzusammensetzung, welche
(i) einen Oxonolfarbstoff der allgemeinen Formel (I) 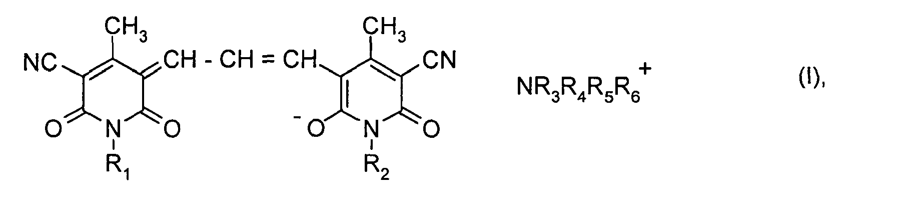 worin
R₁ und R₂ jeweils unabhängig voneinander lineare oder verzweigte C₂-C₆Alkylreste sind;
R₃, R₄ und R₅ jeweils unabhängig voneinander Wasserstoff, ein C₂-C₁₄Alkylrest, welcher unsubstituiert oder hydroxy- oder aminosubstituiert und gegebenenfalls von einem Sauerstoffatom unterbrochen sein kann, sind und
R₆ ein C₂-C₁₄Alkylrest, welcher unsubstituiert oder hydroxy- oder aminosubstituiert und gegebenenfalls von einem Sauerstoffatom unterbrochen sein kann, ist; und
(ii) mindestens ein Cellulosenitrat-Bindemittel umfasst.

2. Farbmittelzusammensetzung nach Anspruch 1, welche weiterhin mindestens einen Weichmacher, ausgewählt aus der Gruppe von Phthalaten, Citraten und Adipaten, umfasst.

3. Farbmittelzusammensetzung nach Anspruch 1 oder 2, wobei R₁ und R₂ jeweils unabhängig voneinander ein linearer oder verzweigter C₄-C₅Alkylrest sind.

4. Farbmittelzusammensetzung nach Anspruch 3, wobei R₁ und R₂ jeweils unabhängig voneinander ein n-Butyl- oder n-Pentylrest sind.

5. Farbmittelzusammensetzung nach einem der Ansprüche 1 bis 4, wobei R₃, R₄, R₅ und R₆ jeweils unabhängig voneinander lineare oder verzweigte C₂-C₆Alkylreste sind.

6. Farbmittelzusammensetzung nach Anspruch 5, wobei R₃, R₄, R₅ und R₆ jeweils n-Butylreste sind.

7. Farbmittelzusammensetzung nach einem der Ansprüche 1 bis 6, welche einen Oxonolfarbstoff der Formel II 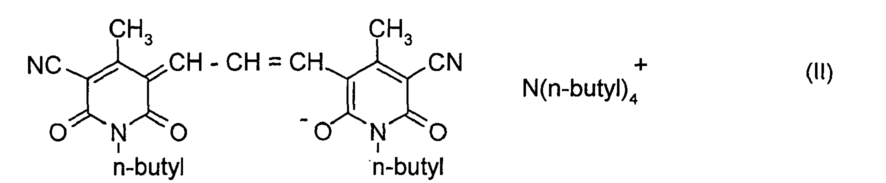 umfasst.

8. Verfahren zum Bedrucken von halbsynthetischem oder synthetischem hydrophoben Fasermaterial, welches das Aufbringen auf oder Einarbeiten von mindestens einem Oxonolfarbstoff der allgemeinen Formel (I) und/oder der Farbmittelzusammensetzung nach einem der Ansprüche 1 bis 7 in das Material umfasst.

9. Verfahren nach Anspruch 8, wobei das halbsynthetische oder synthetische hydrophobe Fasematerial Polyesterfasern umfasst.

10. Verfahren zum Färben oder Bedrucken von Papier, Kunststofffolien oder Metallfolien, welches das Aufbringen auf oder Einarbeiten von mindestens einem Oxonolfarbstoff der allgemeinen Formel (I) und/oder der Farbmittelzusammensetzung nach einem der Ansprüche 1 bis 7 in das Material umfasst.

11. Verwendung von mindestens einem Oxonolfarbstoff der allgemeinen Formel (I) und/oder der Farbmittelzusammensetzung nach einem der Ansprüche 1 bis 7 zum Färben oder Bedrucken von halbsynthetischem oder synthetischem hydrophoben Fasermaterial, Papier, Kunststofffolien oder Metallfolien.

12. Gefärbtes oder bedrucktes Material, erhalten nach dem Verfahren nach einem der Ansprüche 8 bis 10.

13. Verwendung von mindestens einem Oxonolfarbstoff der allgemeinen Formel (I) und/oder der Farbmittelzusammensetzung nach einem der Ansprüche 1 bis 7 im Tintenstrahldruck.

## Revendications

1. Une composition de colorant comprenant
(i) une teinture à base d'oxonol de formule générale (1) 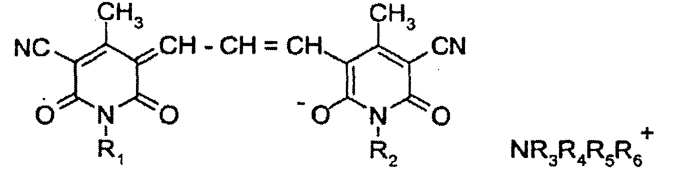 dans laquelle
- R₁ et R₂ sont chacun, indépendamment l'un de l'autre, des radicaux (C₂-C₆)-alkyl linéaires ou ramifiés;
- R₃, R₄ et R₅ sont chacun, indépendamment l'un de l'autre, des atomes d'hydrogène, des radicaux (C₂-C₁₄)-alkyl, qui peuvent être non substitués ou substitués par un groupe hydroxy ou amino et éventuellement interrompus par un atome d'oxygène, et
- R₆ est un radical (C₂-C₁₄)-alkyl, qui peuvent être non substitués ou substitués par un groupe hydroxy ou amino et éventuellement interrompus par un atome d'oxygène; et
(ii) au moins un liant à base de nitrate de cellulose.

2. La composition de colorant selon la revendication 1, comprenant en outre au moins un plastifiant choisi dans le groupe comprenant les phtalates, citrates, et adipates.

3. La composition de colorant selon la revendication 1 ou 2, dans laquelle R₁ et R₂ sont chacun, indépendamment l'un de l'autre, des radicaux (C₄-C₅)-alkyl linéaires ou ramifiés.

4. La composition de colorant selon la revendication 3, dans laquelle R₁ et R₂ sont chacun, indépendamment l'un de l'autre un résidu n-butyl ou un résidu n-pentyl.

5. La composition de colorant selon une quelconque des revendications 1 à 4, dans laquelle R₃, R₄, R₅ et R₆ sont chacun, indépendamment l'un de l'autre, des radicaux (C₂-C₆)-alkyl linéaires ou ramifiés.

6. La composition de colorant selon la revendication 5, dans laquelle R₃, R₄., R₅ et R₆ sont tous des radicaux n-butyl.

7. La composition de colorant selon une quelconque des revendications. 1 à 6 comprenant une teinture à base d'oxonol de formule

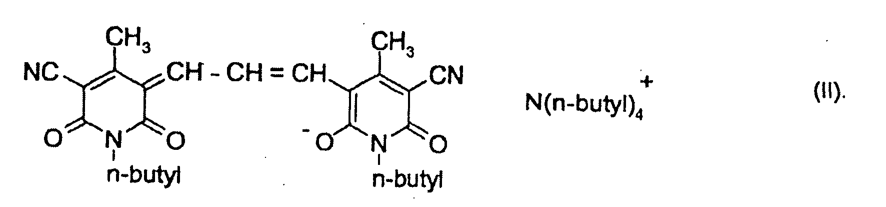

8. Un procédé. d'impression de matériaux fibreux semi-synthétiques ou de matériaux fibreux synthétiques hydrophobes comprenant l'application ou l'incorporation dans ledit matériau d'au moins une teinture à base d'oxonol de formule générale (1) et/ou de la composition de colorant selon une quelconque des revendications 1 à 7.

9. Le procédé selon la revendication 8, dans lequel lesdits matériaux fibreux synthétiques hydrophobes comprennent des fibres de polyester.

10. Un procédé de teinture ou d'impression de papier, de films plastiques ou de feuilles métalliques comprenant l'application ou l'incorporation dans ledit matériau d'au moins une teinture à base d'oxonol de formule générale (1) et/ou de la composition de colorant selon une quelconque des revendications 1 à 7.

11. Utilisation d'au moins une teinture à base d'oxonol de formule générale (1) et/ou de la composition de colorant selon une quelconque des revendications 1 à 7 pour la coloration ou impression de matériaux fibreux semi-synthétiques ou de matériaux fibreux synthétiques hydrophobes, de papier, de films plastiques ou de feuilles métalliques.

12. Un matériau coloré ou imprimé obtenu par le procédé selon une quelconque des revendications 8 to 10.

13. Utilisation d'au moins une teinture à base d'oxonol de formule générale (1) et/ou de la composition de colorant selon une quelconque des revendications 1 à 7 pour l'impression par jets d'encre.
